Europäisches Patentamt

European Patent Office

Office européen des brevets

(11) Publication number: **0 405 470 A2**

# EUROPEAN PATENT APPLICATION

(21) Application number: **90112166.5**

(22) Date of filing: **26.06.90**

(51) Int. Cl.⁵: **H04N 1/46**

(30) Priority: **26.06.89 JP 162937/89**

(43) Date of publication of application:
**02.01.91 Bulletin 91/01**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Suzuki, Masahiro**
**c/o Seiko Instruments Inc., 31-1, Kameido**
**6-chome**
**Koto-ku, Tokyo(JP)**

(74) Representative: **Fleuchaus, Leo, Dipl.-Ing. et al**
**Melchiorstrasse 42**
**D-8000 München 71(DE)**

(54) **Color picture image reading device.**

(57) A color picture reading device having a color image senser composed of a plural number of sensor chips arranged in series and being supposed to connect one of a plurality of output devices (5) to reproduce a color picture image, said device comprises a first memory (6) for storing conpensation coefficients corresponding to the respective sensor chips, a second memory (7) for storing other correction coefficients corresponding to the respective output devices, an arithmetic circuit (8) for calculating final correction coefficients from the contents of the first and second memories and a correction circuit (4) for compensating both discrepancy in color characteristics between sensor chips and difference of the color characteristics between respective output devices by using the calculated final correction coefficients.

# FIG. 1

# EP 0 405 470 A2

## COLOR PICTURE IMAGE READING DEVICE

### Background of the invention

The present invention relates to a color picture image reading device, and particularly, to a color picture image reading device for applying the color correction process to the color image data obtained by the color image sensor constituted of a plural number of color image sensor chips on-chipped with color filters in series.

A color picture image reading device is in general composed of a picture image reader for reading out a picture image in analog form and outputting analog R,G,B signals, having a light source and an image sensor, a digital processor for converting the R,G,B signals into R,G,B digital data, and a correction means for applying required correction to the R,G,B digital data.

An image sensor for optically read out an original picture image information is required to have a certain degree of length in general to a main scanning direction of reading out. For example, in order to read out an original picture image written on a paper of A 4 size in a closely adhered type image sensor, at least a length of 210 mm for the shorter width of the A 4 size is necessary. However, it is difficult to prepare an image sensor having such a length in one chip, and the preparation is unpreferable in respect of the cost. Therefore, there is used such a method as shown in Fig.2, in which a plural number of chips of the image sensors shorter than the length finally required are connected in series, and is used as one image sensor.

In the case when an image sensor consisting of a plural number of sensor chips as described above were used, there is generated in general the discrepancy in color characteristics between the sensor chips. Particularly, since in the case when a sensor chip on-chipped with a color filter is used, the discrepancy is generated in the spectroscopic transparency characteristics of the color filters, so that also in the case when a uniform manuscript without pattern and the like has been read out, discrepancy is generated in color picture image signals between the chips, even when shading compensation is applied thereto. Due to such a fact, when the color picture image is intended to be reproduced by using the color picture image signals as they are, discrepancy is generated in the color picture element data in correspondence to the color characteristics of the chips read out, and in total, a smooth reproduced picture image can not be obtained. Therefore, in order to correct the discrepancy in color characteristics of a plural number of sensor chips, color correction corresponding to respective chips are necessary. The color picture element data are in general composed of three data, that is R,G,B data and the correction coefficients used in the color correction to the color picture element data forms a 3x3 correction matrix. The color correction is carried out by the multiplication between the R,G,B data and the correction matrix.

On the other hand, the color image reading device of the general use assumes in general the outputs of the color image with the output devices (CRT, color printer, etc.) of a plural number of kinds, and reproduced images can be obtained by being connected to these devices.

In such a situation, for the output device (such as CRT, color printer, etc.), since the color characteristics are different by the kind thereof, color correction corresponding to the respective output devices also necessary. This type of color correction is carried out in the same way as the color correction corresponding to the discrepancy in the color characteristics between the sensor chips is carried out.

As described above, when the discrepancy of the color characteristics between the sensor chips and the difference of the color characteristics of respective output device are intended to be corrected, the combinations thereof become very abundant. For example, when it is assumed that the number of sensor chips constituting one line sensor is m pieces, and the kinds of the output devices are n kinds, then, when the correction is to be carried out with color correction coefficients corresponding to all of these ones, the number of combinations necessary for the color correction becomes m x n. Resulting number of the correction coefficients becomes m x n x 9 owing to that each correction requires 9 coefficients. When all of these color correction coefficients are to be memorized, there is the problem that a vast amount of memories are required, and the labor for determining the color correction coefficient increases.

### Summary of the invention

It is therefore an object of the invention to provide a color picture image reading device employing a small capacity of the memories for storing the correction coefficients in which the color correction

2

corresponding to the discrepancy of the color characteristic between chips and the color characteristics of various kinds of color picture image output device is applicable to the color data signals to reproduce the color picture image.

In the present invention, in order to accomplish the object of the invention, a first correction memory means for storing the chip-dependent color correction coefficients and a second correction memory means for storing the output device -dependent color correction coefficients are provided individually, and the color correction coefficients corresponding to the discrepancy of the color characteristics between chips as well as to the difference of color characteristics of various color picture image devices were separately provided and memorized, and after setting the kinds of the color picture image output devices, the totalized color correction coefficients were calculated by arithmetic means, and are memorized in third correction memory means, and the color correction is carried out on the basis of the calculated color correction coefficients by use of a correction means.

When the device is constituted in such a manner as described above, it is not necessary to provide all of the color correction coefficients of m x n sets for the combination of the sensor chip number n and the number of kinds m of the output devices, and it will be sufficient that the color correction coefficients for respective elements are separately memorized, so that the sets of the color correction coefficients becomes m + n, and a small volume of the correction memory will be sufficient. Thus, the labor for determining the color correction coefficients becomes less, and yet, the color correction corresponding to the discrepancy of the color characteristics between chips and the color characteristics of various kinds of color picture image output devices can be applied to the color data signals for reproduction of the color picture image on the output devices.

## Brief Description of the Drawings

Fig. 1 is a block diagram for showing an embodiment of the color picture image reading device of the present invention;

Fig. 2 is a plane view of the image sensor consisting of a plural number of chips; and

Fig. 3 is a block diagram for showing an embodiment of the color correction means for carrying out the color correction of the present invention.

## Detailed Description of the Preferred Embodiments

In the following, an embodiment of the present invention will be explained with reference to the drawings.

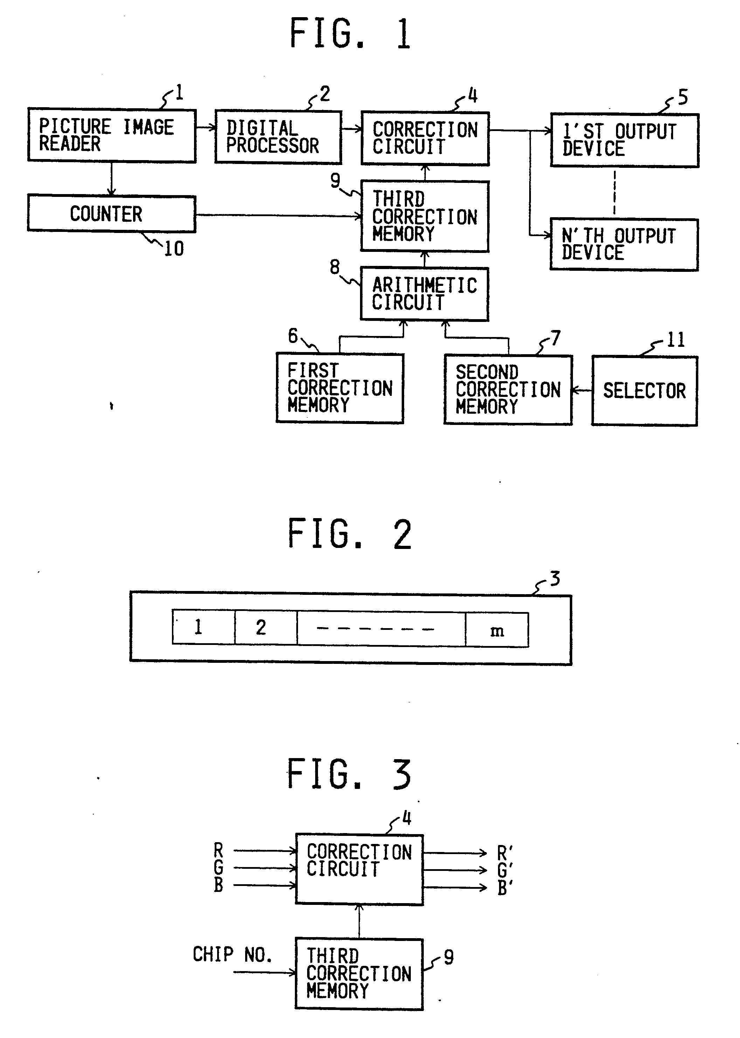

Fig. 1 is a block diagram showing an embodiment of the color picture image reading device of the present invention. Color picture image signals read by a picture image reader 1 comprising an light source, focusing system, and color image sensor 3 are transformed into color picture element data via a digital processor 2 comprising an A/D converter and shading compensation means. Here, the image sensor 3 is constituted of m pieces of sensor chips as shown in Fig. 2. Each sensor chip has a predetermined number of sensing elements corresponding to the picture element.

The color picture element data effect the color correction arithmetic by a color correction circuit 4 having an adder and a multiplier, and the color compensated color picture element data are supplied by one of the output devices 5 of n kinds. On the other hand, in a first correction memory 6 m sets of the color correction coefficients A corresponding to respective chips are memorized, and in a second correction memory 7 n sets of the color correction coefficients K corresponding to the respective output devices are memorized under the coded number of the output device as address.

At first, one of the output devices 5 for supplying color images is selected via selector 11 by manual operation. The selector may have a detection circuit for detecting the output device which is connected. Here, it is assumed that the k th output device has been selected among the n members of existing devices. The selector outputs signals representing that k th output device has been selected.

Next, all correction coefficients of m set $A_a$ (a = 1 to m) are supplied by the first correction memory circuit and the k th correction coefficient set $K_k$ are supplied by the second correction memory circuit means by address signals received from the selector. Among two kinds of color correction coefficient matrix A and K, $A_a$ (a = 1 to m) are multiplied with $K_k$ by the arithmetic circuit 8 to receive the product $C_{ka} = K_k A_a$ (a = 1 to m).

3

The results are memorized in a third correction memory circuit 9 with the chip number (1 to m) as address. Although the arithmetic circuit 8 can consist of a logic circuit such as an adder and a multiplier, a solution using softwear is sufficient. The color correction coefficient K does not depend on the sensor chip, as it has been hitherto, but is possible to be treated as a value specific to the respective output device.

Next, reading out of a color manuscript is started. The color manuscript is sequentially read out with the color picture image reader 1 from the left end to the right end by one sensing element. The color picture image signals are sequentially transformed into digital color picture element data via digital processor 2. On the other hand, pulse signals representing the output of the picture elements from the color image reader 1 are counted by a counter 10. The counter 10 determines the sensor chip being in output by dividing the counted value by the number of the sensing element in one chip and supplies the sensor chip number being in output to the third correction memory circuit. The third correction memory circuit supplies one set of the totalized color correction coefficients $C_{ka}$ corresponding to the entered sensor chip number to a correction circuit by using the sensor chip number as address. The color picture element data are subjected to color correction by the arithmetic circuit 4 by use of the entered totalized color correction coefficient $C_{ka}$ from the third correction memory circuit 9 corresponding to the sensor chips read out, and supplied to the k th output device.

Fig. 3 is a block diagram showing an embodiment of the color correction circuit for carrying out the color correction arithmetic of the present invention. The correction circuit 4, similar as in the equation of the color correction arithmetic shown in the formula (1), calculates the color picture image data R, G and B, and the color correction coefficients $C_{11}$ to $C_{33}$ using the matrix arithmetic. This can be done with a general product and sum arithmetic device. Also, in the color correction coefficients, the value differs in dependence to the sensor chips.

$$\begin{pmatrix} R' \\ G' \\ B' \end{pmatrix} = \begin{pmatrix} C_{11} & C_{12} & C_{13} \\ C_{21} & C_{22} & C_{23} \\ C_{31} & C_{32} & C_{33} \end{pmatrix} \begin{pmatrix} R \\ G \\ B \end{pmatrix} \qquad (1)$$

The color correction R,G,B signals are supplied to the color picture image output device 5.

Thus, the R, G, B signals may be the color signals of another kind, and in such a case, it is needless to say that the color correction arithmetic of another type is applied thereto. Also, the color correction coefficients need not be a 3 x 3 matrix as in equation (1), but may be one which is multiplied to higher order. Further, in the embodiment shown in Fig. 1, although explanation has been given on such an example in which the R,G,B signals are directly supplied to the output device, the color corrected R,G,8 signals may be supplied , for example, to a memory device of a computer.

As explained above, according to the present invention, the small capacity of the correction memory for memorizing the color correction coefficient will be sufficient, and moreover, it is not necessary to seek the correction coefficients corresponding to respective chips per output devices, and yet, the color correction corresponding to the sensor chips and the color picture image output device can be applied.

## Claims

1. A color picture image reading device for reading out a color picture image and supplying picture image data to one of color picture image output devices to reproduce the color picture image comprising;
read out means for reading out a picture image on a manuscript and supplying color image signals representing the picture image having a plurality of sensor chips arranged in series;
digital converting means for converting the picture image signals to digital data; .
first memory means for storing color correction coefficients corresponding to respective sensor chips for correcting the discrepancy in color characteristics between sensor chips,
second memory means for storing the color correction coefficients for adapting the color characteristics to respective kinds of color picture image output devices,
arithmetic means for calculating totalized color correction coefficients from the color correction coefficients corresponding to respective sensor chips and the color correction coefficients corresponding to respective kinds of color picture image output devices;

third memory means for storing the arithmetic results by the arithmetic means; and

color correction means for applying correction to the digital data having means for supplying compensated digital data.

2. A color picture image reading device as claimed in claim 1 further comprising selecting means for selecting one of the output devices.

3. A color picture image reading device as claimed in claim 2 wherein said second memory means include means for supplying correction coefficients corresponding to the output device selected by said selecting means.

4. A color picture image reading device as claimed in claim 1 further comprising detecting means for detecting the sensor chip which provides the output signal.

5. A color picture image reading device as claimed in claim 1 wherein said third memory means includes means for supplyng correction coefficients corresponding to the chip which provides the output signal.

6. A color picture image reading device as claimed in claim 4 wherein said detecting means includes counting means for counting the number of the supplied picture image signals.

7. A color picture image reading device as claimed in claim 6 wherein each sensor chip has an equal number of sensing elements and wherein said detecting means further including dividing means for dividing the counting value by the number of the sensing elements in one sensor chip.

8. A color picture image reading device as claimed in claim 1 wherein said arithmetic means includes adder means and multiplier means.

# FIG. 1

# FIG. 2

# FIG. 3